Europäisches Patentamt

European Patent Office

Office européen des brevets

(11) Publication number: **0 047 181**
**B1**

# EUROPEAN PATENT SPECIFICATION

(45) Date of publication of patent specification: **13.11.85**

(51) Int. Cl.⁴: **G 03 B 27/62, G 03 G 15/00**

(21) Application number: **81304012.8**

(22) Date of filing: **02.09.81**

(54) **A substrate inverter.**

(30) Priority: **02.09.80 US 182918**
**02.09.80 US 182919**
**02.10.80 US 193228**

(43) Date of publication of application:
**10.03.82 Bulletin 82/10**

(45) Publication of the grant of the patent:
**13.11.85 Bulletin 85/46**

(84) Designated Contracting States:
**DE FR GB**

(56) References cited:
**DE-B-1 185 994**
**FR-A-1 304 563**
**GB-A-2 020 251**
**US-A-3 856 295**
**US-A-3 942 785**

(73) Proprietor: **XEROX CORPORATION**
**Xerox Square - 020**
**Rochester New York 14644 (US)**

(72) Inventor: **Roller, George John**
**97 Burrows Hill Drive**
**Rochester New York 14625 (US)**
Inventor: **Baldwin, Leroy Allan**
**19 Arnold Park**
**Rochester New York 14607 (US)**
Inventor: **Prats, Danny Joseph**
**80 Longsworth Drive**
**Rochester New York 14625 (US)**
Inventor: **Schenk, Richard Clement**
**1246 LaBaron Circle**
**Webster New York 14580 (US)**

(74) Representative: **Frain, Timothy John et al**
**c/o Rank Xerox Limited Patent Department**
**Rank Xerox House 338 Euston Road**
**London NW1 3BH (GB)**

Courier Press, Leamington Spa, England.

## Description

The present invention relates to a substrate or sheet inverter, and more particularly to an inverter providing improved handling of variable sized sheets within the inverter.

As xerographic and other copiers increase in speed, and become more automatic, it is increasingly important to provide higher speed yet more reliable and more automatic handling of both the copy sheets being made by the copier and the original document sheets being copied. It is desired to accommodate sheets which may vary widely in size, weight, thickness, material, condition, humidity, age, etc. These variations change the beam strength or flexural resistance and other characteristics of the sheets. Yet the desire for automatic and high speed handling of such sheets without jams, misfeeds, uneven feeding times, or other interruptions increases the need for reliability of all sheet handling components. A sheet inverter is one such sheet handling component with particular reliability problems.

Although a sheet inverter is referred to in the copier art as an "inverter", its function is not necessary to immediately turn the sheet over (i.e. exchange one face for the other). Its function is to effectively reverse the sheet orientation in its direction of motion. That is, to reverse the lead edge and trail edge orientation of the sheet. Typically in inverter devices, as disclosed here, the sheet is driven or fed by feed rollers or other suitable sheet driving mechanisms into a sheet reversing chute. By then reversing the motion of the sheet within the chute and feeding it back out from the chute, the desired reversal of the leading and trailing edges of the sheet in the sheet path is accomplished. Depending on the location and orientation of the inverter in a particular sheet path, this may or may not also accomplish the inversion (turning over) of the sheet. In some applications, for example, where the "inverter" is located at the corner of a 90° to 180° inherent bend in the copy sheet path, the inverter may be used to actually prevent inverting of a sheet at that point, i.e. to maintain the same side of the sheet face-up before and after this bend in the sheet path. On the other hand, if the entering and departing path of the sheet, to and from the inverter, is in substantially the same plane, the sheet will be inverted by the inverter. Thus, inverters have numerous applications in the handling of either original document or copy sheets to either maintain or change the sheet orientation.

Inverters are particularly useful in various systems of pre or post collation copying, for inverting the original documents, or for maintaining proper collation of the sheets. The facial orientation of the copy sheet determines whether it may be stacked in forward or reversed serial order to maintain collation. Generally, the inverter is associated with a by-pass sheet path and gate so that a sheet may selectively by-pass the inverter, to provide a choice of inversion or non-inversion. The present invention may be utilized, for example, in the chute inverter of a simplex/duplex copying system of the type disclosed in U.S. Patent application Serial No. 071,613, filed August 31, 1979, by the same assignee, in the name of Ravi B. Sahay. (EP—A2—24 936).

Typically in a reversing chute type inverter, the sheet is fed in and then wholly or partially released from a positive feeding grip or nip into the inverter chute, and then reacquired by a different feeding nip to exit the inverter chute. Such a temporary loss of positive gripping of the sheet by any feed mechanism during the inversion increases the reliability problems of such inverters.

The present invention is directed to improving the reliability of the inverter in this and other critical aspects of this operation, yet to also accommodate a range of different sheet sizes within the same size inverter and the same mechanism.

As noted above, many inverters, particularly those utilizing only gravity, have reliability problems in the positive output or return of the sheet at a consistent time after the sheet is released in the inverter chute. Those inverters which use chute drive rollers or other drive mechanisms have a more positive return movement of the sheet, but this normally requires a movement actuator (clutch or solenoid) for the drive and either a sensor or a timing mechanism to determine the proper time to initiate the actuation of this drive mechanism so that it does not interfere with the input movement of the sheet, and only thereafter acts on the sheet to return it to the exit nip or other feed-out means. Furthermore, inverter reliability problems are aggravated by variations in the condition or size of the sheet. For example, a preset curl in the sheet can cause the sheet to assume an undesirable configuration within the chute when it is released therein, and interfere with feed-out.

Also, paper drive systems that incorporate constant drive forces usually cause damage to the lead edge of lightweight paper when the drive force is sufficient to drive heavyweight paper.

In contrast, the inverter disclosed herein can provide positive buckling of the sheet between drive rollers located within a chute engaging the lead edge of the sheet and an input feeder which is pushing the trail edge of the sheet into the chute, for a positive sheet ejection force. Yet, a conventional range of sheet dimensions, and a wide range of sheet thicknesses and weights, may be accommodated within this inverter chute, without damaging the lead edge of lightweight sheets or sacrificing reliability of output from the inverter chute.

To this end, an inverter according to the invention comprises inversion channel means, input drive means for driving a substrate into said channel means, and output drive means for driving a substrate out of said channel means, characterised by nip means located within said channel means and downstream of said input drive means for applying a continuous force to the substrate in a direction opposite to the initial incoming sheet direction while the substrate is being influenced by said input means, whereby as the last portion of the substrate leaves said input means the force of said nip means will drive the substrate into said output means for movement out of said channel means.

In order that the invention may be more readily understood, reference will now be made to the accompanying drawings, in which:—

Figure 1 is a schematic side view of an exemplary copier incorporating an aspect of the present invention;

Figure 2 is an exploded side view of the inverter shown in Figure 1;

Figure 3 is a partial end view of the corrugation apparatus shown in Figure 2 taken along line 3—3;

Figures 4—6 are exploded side views of other embodiments of the retard drive mechanism;

Figure 7 is a partial end view of another embodiment of a corrugation apparatus;

Figure 8 is a partial end view of the corrugation apparatus taken along the lines 8—8 in Figure 7; and

Figure 9 is an embodiment of the invention as shown in Figure 1 with a buckle inhibitor added.

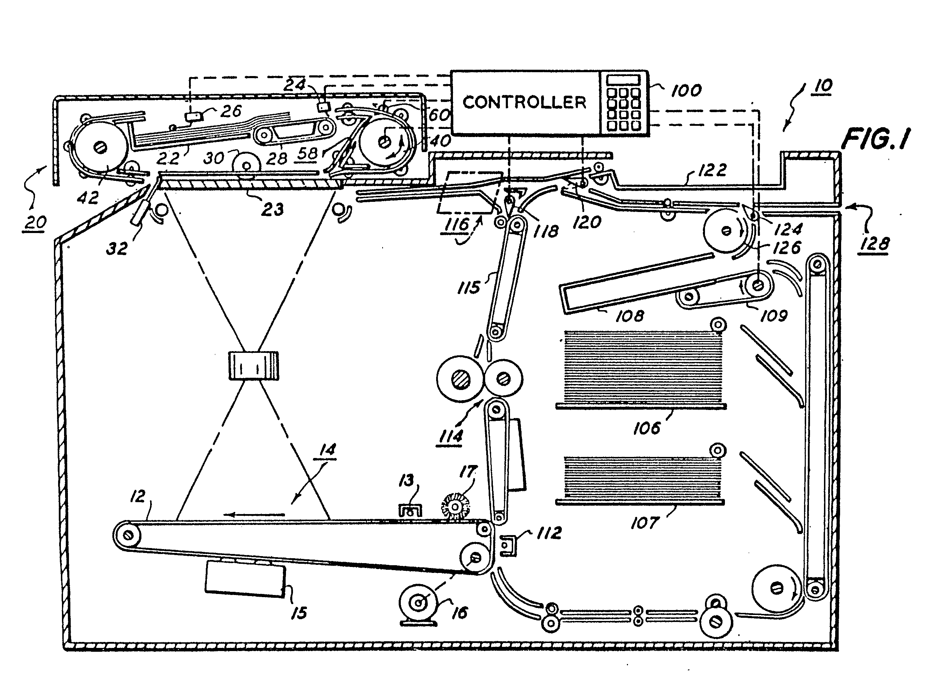

Referring to the exemplary xerographic copier 10 shown in Figure 1, and its exemplary automatic document feeding unit 20, it will be appreciated that various other recirculating document feeding units and copiers may be utilized with the present invention. This copier is described in detail in U.S. application Serial No. 071,613, filed August 31, 1979.

The exemplary copier 10 conventionally includes a xerographic photoreceptor belt 12 and the xerographic stations acting thereon for respectively charging 13, exposing 14, developing 15, driving 16, and cleaning 17. The copier 10 is adapted to provide duplex or simplex pre-collated copy sets from either duplex or simplex original documents copied from the recirculating document handler 20. Two separate copy sheet trays 106 and 107 are provided to feed clean copy sheets from either one. The control of the sheet feeding is, conventionally, by the machine controller 100. The controller 100 is preferably a known programmable microprocessor as exemplified by U.S. Patent 4,144,450 issued to J. Donahue et al on March 13, 1979, which conventionally also controls all of the other machine functions described herein including the operation of the document feeder, the document and copy sheet gates, the feeder drives, etc., and is incorporated herein by reference. As further disclosed, it also conventionally provides for storage and comparison of the counts of the copy sheets, the number of documents recirculated in a document set, the number of copy sets selected by the operator through the switches thereon, etc.

The copy sheets are fed from a selected one of the trays 106 or 107 to the xerographic transfer station 112 for the transfer of the xerographic image of a document page to one side thereof. The copy sheets here are then fed through vacuum transports vertically up through a conventional roll fuser 114 for the fusing of the toner image thereon. From the fuser, the copy sheets are fed to a gate 118 which functions as an inverter selector finger. Depending on the position of the gate 118, the copy sheets will either be deflected into a sheet inverter 116 or bypass the inverter and be fed directly onto a second decision gate 120. Those copy sheets which bypass the inverter 116 (the normal path here) have a 90° path deflection before reaching the gate 120 which inverts the copy sheets into a face-up orientation, i.e. the image side which has just been transferred and fused is face-up at this point. The second decision gate 120 then either deflects the sheets without inversion directly into an output tray 122 or deflects the sheets into a transport path which carries them on without inversion to a third decision gate 124. This third gate either passes the sheets directly on without inversion into the output path 128 of the copier, or deflects the sheets into a duplex inverting roller transport 126. The inverting transport 126 feeds the copy sheets into a duplex tray 108. The duplex tray 108 provides intermediate or buffer storage for those copy sheets which have been printed on one side and on which it is desired to subsequently print an image on the opposite side thereof, i.e. the sheets being duplexed. Due to the sheet inverting by the roller 126, these buffer set copy sheets are stacked into the duplex tray face-down. They are stacked in the duplex tray 108 on top of one another in the order in which they were copied.

For the completion of duplex copying, the previously simplexed copy sheets in the tray 108 are fed seriatim by the bottom feeder 109 from the duplex tray back to the transfer station for the imaging of their second or opposite side page image. This duplex copy sheet path is basically the same copy sheet path provided for the clean sheets from the trays 106 or 107, illustrated at the right hand and bottom of Figure 1. It may be seen that this sheet feed path between the duplex feeder 109 and the transfer station 112 inverts the copy sheets once. However, due to the inverting roller 126 having previously stacked these sheets face-down in the tray 108, they are presented to the transfer station 112 in the proper orientation, i.e. with their blank or opposite sides facing the phororeceptor 12 to receive the second side image. The now duplexed copy sheets are then fed out through the same output path through the fuser 114 past the inverter 116 to be stacked with the second printed side face-up. These completed duplex copy sheets may then be stacked in the output tray 122 or fed out past the gate 124 into the output path 128.

The output path 128 transports the finished copy sheets (simplex or duplex) either to another output tray, or preferably, to a finishing station where the completed precollated copy sheets may be separated and finished by on-line stapling, stiching, glueing, binding, and/or off-set stacking.

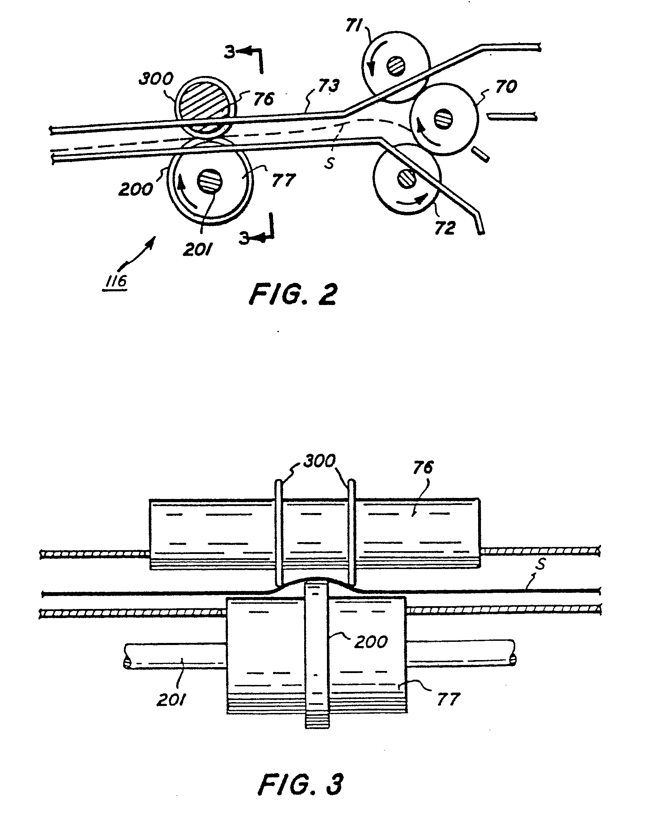

In reference to an aspect of the present invention and Figure 2, when inversion of copy sheets is required, for example, job recovery, maintaining face-up or face-down output collation, simplex/duplex copying with an odd number of simplex documents, etc., tri-roll inverter 116 is used. Copy sheets are fed from either tray 106 or 107 past transfer means 112 and onto conveyor 115. As a sheet leaves conveyor 115, it approaches decision gate 118 which is controlled by controller 100. Gate 118 is actuated to the right as viewed in Figure 1 which causes sheet S to be deflected into an input nip formed by rollers 70 and 72. These rollers drive the sheet into chute 73 and subsequently into a roll on roll nip formed between idler roll 76 and drive roller 77 which is driven by conventional means (not shown). Corrugation means 200 and 300 are mounted on roll 76 and roll 77, respectively, as shown in Figure 3. Drive roller 77 mounted on shaft 201 is constantly rotating in a clockwise direction which is opposite to input drive roller 72. The nip formed between elastomeric rings 300 and ring 200 has slight frictional characteristics and, therefore, apply a continuous retard force against the incoming sheet. However, this retarding force is not enough to inhibit forward movement of the incoming sheet through the nip. When the last portion of the sheet S leaves the nip between rollers 70 and 72, the friction force of nip 200, 300 will cause the sheet to buckle around roller 70 and into the output nip formed by rollers 70 and 71 for ouward movement. As soon as the sheet is "walked" around roller 70 to the exit nip and is under control of the output rollers, the next sheet can be fed into the inverter allowing simultaneous sheet inversion. After moving through nip 70, 71, the sheet approaches gate 120 which is actuated by controller 100 into either the dotted line or solid line positions shown in Figure 1 depending on the reason for inverting.

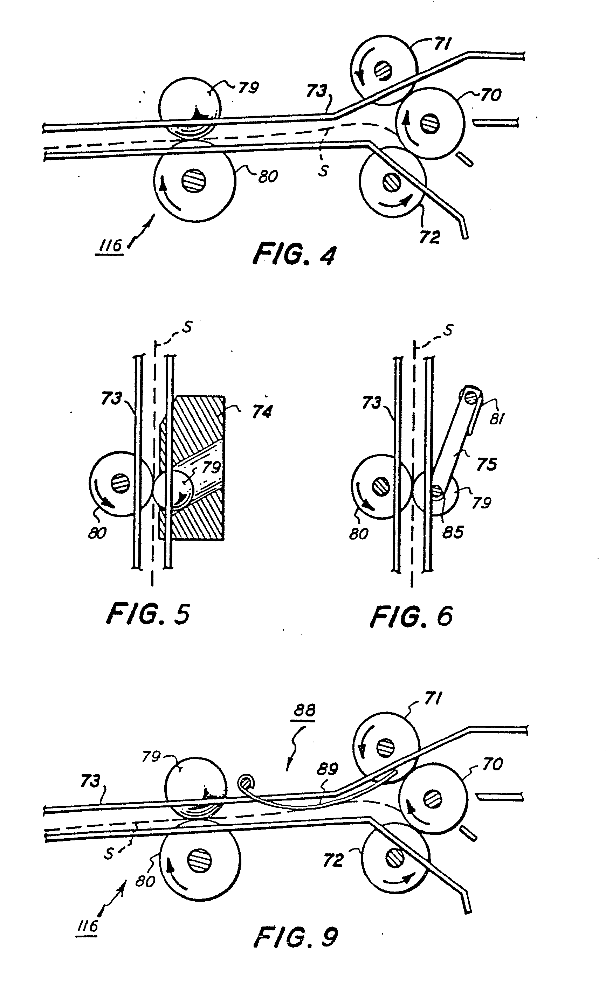

In the alternative, the rollers 70, 72 may drive the sheet into a ball on roll nip formed between idler ball 79 and drive roller 80 (Figure 4) which is driven by conventional means (not shown). Drive roller 80 is constantly rotating in a clockwise direction which is opposite to input drive roller 72. The nip formed between ball 79 and roller 80 has slight frictional characteristics and, therefore, apply a continuous retard force against the incoming sheet. However, this retarding force is not enough to inhibit forward movement of the incoming sheet through the nip. When the last portion of the sheet S leaves the nip between rollers 70 and 72, the friction force of nip 79, 80 will cause the sheet to buckle around roller 70 and into the output nip formed by rollers 70 and 71 for outward movement.

Alternative embodiments of the present invention especially adapted for employing the friction retard applicator in a vertical plane are shown in Figures 5 and 6. In all of the embodiments that follow, like numerals represent like parts described in respect to Figure 4. In reference to Figure 5, a sheet to be inverted is forwarded down through channel 73 and through the friction retard applicator nip formed between drive roller 80 and idler ball 79. Continuously rotating roller 80 applies a retard force against the incoming sheet and after the sheet escapes the drive force of the members that forwarded it into the channel 73, the frictional force of rotating roller 80 will drive the sheet back in the direction from which it came. Idler ball 79 is supported adjacent to drive roller 80 by housing 74 which has an angled tunnel therein within which ball 79 rides. The tunnel is shaped such that idler ball 79 lightly touches drive roller 80 and forms a nip therewith.

In Figure 6, sheet S is pressed against drive roller 80 by idler ball 79. The idler roller is spring loaded at 81 with the spring pressure being transmitted through arm 75 and shaft 85. In operation, roller 80 has a small friction force and is rotated in the opposite direction to the incoming sheet S continuously. When the last portion of the sheet leaves the driving nip which forces it into channel 73, the friction force of the nip formed between drive roller 80 and idler ball 79 will cause the sheet to buckle into a nip located upstream thereof for outward movement. The use of a ball on roll system in either a horizontal or vertical plane allows a side registration to be achieved within the inverter channel.

In the case of horizontal positioning of the inverter, it has been found that successful inversion of sheets ranging from basic weights of (50 to 120 $gm^{-2}$) can be accommodated with a retard applicator nip force equal to ≈2.2 gram. However, one of the limits to successful inversion of lighter weights of paper concurrent with maintaining a large enough drive force for heavier weights of paper is the buckling which occurs with the lighter weights of sheets. Instead of the sheets being forced through the output nip, they buckle. An answer to this problem is shown in Figure 9 which is identical to Figure 4 with the addition of buckle inhibitor 88. This device could take the form of pivoting ski 89 as shown or the ski could be spring loaded against the bottom of inverter channel 73. Incoming sheets are forced under the ski, thus not allowing the sheet to buckle.

In conclusion for the preferred embodiments of the invention, a substrate inverter is disclosed that includes an input nip formed by rollers 70 and 72. Roller 72 drives the substrate material S through a retard drive force applicator having a nip formed between a corrugated roller 76 on a roller 77, or between a ball 79 on roller 80. The roller 76 or ball 79 is rotating in a direction to oppose the motion of the incoming substrate with a small friction force. However, this friction force is small enough so as to allow the incoming substrate to be forced through the nip. After the last portion of the substrate passes through the input nip, the friction force from the ball on roll nip forces the trail edge of the incoming sheet to maintain contact with roller 70. This causes the trail edge to "walk around" to the exit nip formed between rollers 70 and 71. As soon as the substrate is under control of the exit nip, the next substrate can be fed into the inverter allowing simultaneous substrate inversion.

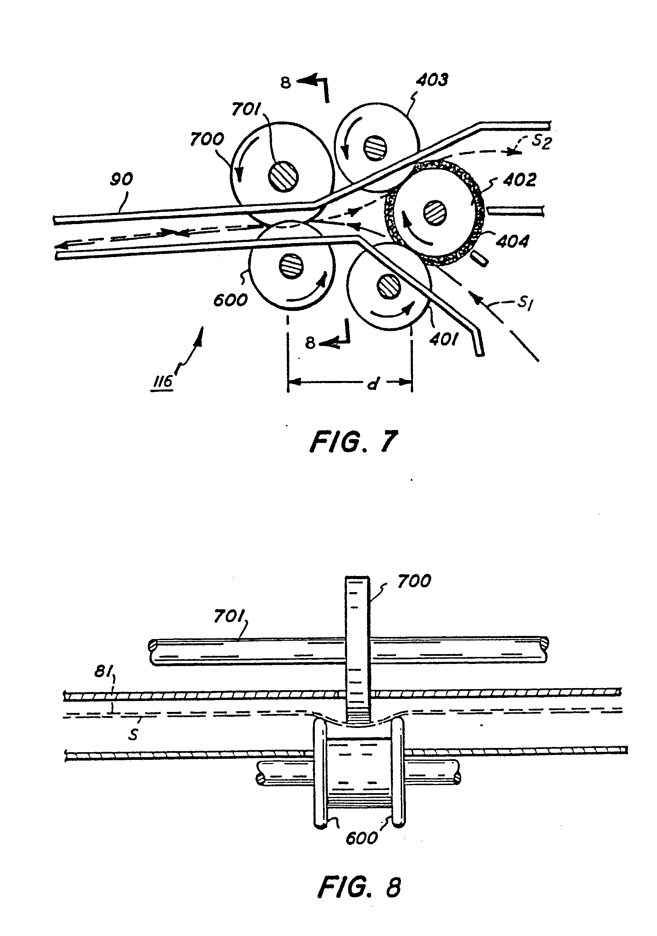

In the embodiment of Figures 7 and 8, the incoming sheet passes through the input nip, and as the trail edge exits the input nip, an opposing force on the sheet maintains this edge in contact with the center roll assembly. This roll assembly has a series of foam roll segments affixed outboard of the central main drive roll. These foam segments are larger in diameter than center drive roll to insure that the edge of the sheet will penetrate the surface of the foam roll. The action of maintaining the sheet against the center roll assembly and the rotational direction of this assembly will result in the edge of the sheet to be lifted and guided by the foam roll segments into the output nip. Once in the output nip, the sheet will be transported out of the inverter and reinserted into the main paper path.

A corrugation nip is located at a critical distance "d" of about 31 mm from the input nip and allows the sheet to enter the corrugation roll set without buckling. The section modulus of the sheet increases as the sheet is corrugated by the rolls. This additional stiffness affords a greater operational latitude in overdriving the corrugation nip.

The location of the corrugation nip above the input nip coupled with the increased stiffness imparted by the corrugation rolls, results in a natural line of action toward the output roll nip assisting in sheet transfer between nips. It should be understood that the corrugation nip would be below the input nip if the location of the input and output nip were reversed from what is shown in Figure 7, i.e. the input nip was on top and the output nip was on the bottom of the tri-roll combination. The deflection of the sheet by the corrugation rolls develops a normal force against the drive roll. This normal force and the dynamic coefficient of friction between the corrugation drive roller and sheet creates the force required for the sheet to be maintained in contact with the foam roll segments.

A key functional parameter of this inversion system is the control of the roll penetration and coefficient of drive to develop an adequate drive back force for all paper weights and not exceed yield stress of heavy weight sheets, which could result in sheet marking and/or damage. More specifically, copy sheets are fed from either tray 106 or 107 past transfer means 112 and onto conveyor 115. As a sheet leaves conveyor 115, it approaches decision gate 118 which is controlled by controller 100. Gate 118 is actuated to the right as viewed in Figure 1 which causes the sheet to travel in the direction of arrow S1 (which represents an incoming sheet) to be deflected into an input nip formed between rollers 401 and 402. These rollers drive the sheet into chute 90 and subsequently into a roll on roll nip formed between idler spool 600 and drive roller 700 which is driven by conventional means (not shown). Drive roller 700 is constantly rotating in a clockwise direction which is opposite to input drive rubber roller 402. The nip formed between drive roller 700 and idler roller 600 has slight frictional characteristics and, therefore, apply a continuous retard force against the incoming sheet. However, this retarding force is not enough to inhibit forward movement of the incoming sheet through the nip.

When the last portion of a sheet leaves the nip between rollers 401 and 402, the friction force of nip 600, 700 will cause the sheet to buckle around foam rollers 404 and into the output nip formed by rollers 402 and 403 for outward movement. Rollers 403 could be plastic or urethane. As soon as the sheet is "walked" around rollers 404 to the exit nip and is under control of the output rollers, the next sheet can be fed into the inverter allowing simultaneous sheet inversion. With simultaneous sheet inversion, two sheets (represented by arrows S1 and S2) are in the retard nip at the same time. After moving through nip 402, 403, the sheet approaches gate 120 which is actuated by controller 100 into either the dotted line or solid line positions shown in Figure 1 depending on the reason for inverting.

It is critical to the operation of this system that drive roll 700 be located on the upper side of input nip 401, 402 at a distance "d" of about 31 mm from the input nip. This results in the reduction of forces on the incoming sheet in the multiple mode while developing maximum drive out force on the outgoing sheet due to the placement of the drive roll and the deflection of the sheet by the guide baffles. The soft drive nip is placed about 10° above the input nip. The closeness of the retard nip to the tri-rolls allows sheets to enter the retard nip without buckling.

The tri-roll inverter system of the present invention has advantages over prior tri-roll inverters in that the present system inverts sheets of wide differences in weights and sizes with equal ease whether the inversion takes place with the inverter in a horizontal or vertical plane. This universality of inverter 116 is accomplished by the use of tri-rollers comprising an input shaft assembly of smooth rollers 401, an output shaft assembly of urethane rollers 403, and a middle shaft assembly of rubber rollers 402 flanked by foam rollers 404 of greater diameter.

In Figure 8, there is no contact between the upper drive roller 700 and the lower idler roller 600. The stiffness of the paper provides the normal force to drive roller 700, which through the friction force of ring members 600, is converted into drive force for the paper. As the stiffness of the paper varies, the paper drive force varies in direction proportion. Thus, different stiffnesses of paper can be fed through this system against devices that change their velocities, i.e. stops or other deceleration devices, without lead edge damage to low beam strength papers, but with a large drive force for high beam strength papers.

The drive force of roller 700 will drive the tail edges of sheets leaving the input nip into foam rollers 404, and since the rollers are pliable, the sheets will easily ride into and be carried by the surface of rollers 404 into the output nip formed by rollers 402 and 403. The ease of workability of the present system is enhanced by the proximity of the roll on roll to the input nip. Positioning the roll on roll nip a distance of about 31 millimeters from the input nip reduces the length of the sheet beam thereby increasing the sheet flexure strength and reducing the chance of a sheet collapsing as it enters the roll on roll nip.

In conclusion, a substrate inverter is disclosed that includes an input nip formed by urethane rollers 401 and rubber rollers 402. The shaft that supports rollers 402 also has oversized foam rollers 404 thereon. Rollers 402 drive the substrate material through a retard drive force applicator having a nip formed between drive roller 700 and idler roller 600. The roller 700 is rotating in a direction to oppose the motion of the incoming substrate with a small friction force. However, this friction force is small enough so as to allow the incoming substrate to be forced through the nip. After the last portion of the substrate passes through the input nip, the friction force from the retard nip forces the trail edge of the incoming sheet to maintain contact with foam rollers 404. This causes the trail edge to "walk around" to the exit nip formed between rollers 402 and 403. As soon as the substrate is under control of the exit nip, the next substrate can be fed into the inverter allowing simultaneous substrate inversion.

## Claims

1. A substrate inverter (116) comprising inversion channel means (73 or 90), input drive means (70, 72 or 401, 402) for driving a substrate into said channel means, and output drive means (70, 71 or 402, 403) for driving a substrate out of said channel means, characterised by nip means (76, 77 or 79, 80 or 600, 700) located within said channel means and downstream of said input drive means for applying a continuous force to the substrate in a direction opposite to the initial incoming sheet direction while the substrate is being influenced by said input means, whereby as the last portion of the substrate leaves said input means the force of said nip means will drive the substrate into said output means for movement out of said channel means.

2. An inverter according to claim 1, wherein said inversion channel means (73) includes a buckle inhibitor (89) such as a pivotally mounted ski.

3. An inverter according to claim 1 or 2, wherein said nip means comprises an idler ball (79) and a drive roller (80).

4. An inverter according to claim 3 wherein said idler ball (79) is housed within an angled channel (74) located within a support block, or is mounted on a shaft (85) and spring loaded (81) against said drive roller.

5. An inverter according to claim 1 or 2, wherein said nip means (76, 77) is provided with corrugation means (200, 300) for corrugating the substrate to increase the foam strength thereof, said corrugation means (200, 300) preferably including a pair of opposed rollers with at least one ring attached to each roller.

### Patentansprüche

1. Wendevorrichtung (116) für ein Trägermaterial mit einem Wendekanal (73 oder 90), mit einem Einzugsantrieb (70, 72, oder 401, 402) um ein Trägermaterial in den Kanal hineinzuziehen und mit einem Auszugsantrieb (70, 71 oder 402, 403) um das Trägermaterial aus dem Kanal herauszuziehen, gekennzeichnet durch eine Klemmeinrichtung (76, 77 oder 79, 80 oder 600, 700), die innerhalb des Kanals angeordnet ist und stromabwärts des Einzugsantriebs liegt, um eine kontinuierliche Kraft auf das Trägermaterial in einer Richtung auszuüben, die entgegen der Einzugsrichtung des Trägermaterialblattes gerichtet ist, solange das Trägermaterial unter Einfluß der Einzugseinrichtung steht, wobei dann, wenn der letzte Teil des Trägermaterials außer Eingriff mit der Einzugseinrichtung kommt, die Kraft der Klemmeinrichtung das Trägermaterial zu der Auszugseinrichtung bringt, mit der es aus dem Kanal herausgezogen wird.

2. Wendevorrichtung nach Anspruch 1, wobei der Wendekanal (73) einen Krümmungsverhinderer (39), wie z.B. einen schwenkbar befestigten Bügel, aufweist.

3. Wendevorrichtung nach Anspruch 1 oder 2, wobei die Klemmeinrichtung eine Reibrolle (79) und eine Antriebsrolle (80) aufweist.

4. Wendevorrichtung nach Anspruch 3, wobei die Leerlaufrolle innerhalb eines in einer Neigung angeordneten Kanales innerhalb eines Trägerblockes angeordnet ist oder auf einer Welle (85) sitzt und gegen die Antriebsrolle federbeaufschlagt (81) ist.

5. Wendevorrichtung nach Anspruch 1 oder 2, wobei die Klemmeinrichtung (76, 77) mit einer eine Wellung des Trägermaterials hervorrufenden Einrichtung (200, 300) versehen ist, um dessen Klemmkraft zu verstärken, wobei die die Wellung hervorrufende Einrichtung (200, 300) vorzugsweise ein Paar sich gegenüberliegenden Rollen mit wenigstens einem Ring auf jeder Rolle umfaßt.

### Revendications

1. Inverseur de substrat (116) comprenant un moyen de canal d'inversion (73 ou 90), un moyen moteur d'entrée (70, 72 ou 401, 402) pour entraîner un substrat et le faire entrer dans le moyen de canal, et un moyen moteur de sortie (70, 71 ou 402, 403) pour entraîner un substrat et le faire sortir du moyen de canal, caractérisé par un moyen à étranglement (76, 77 ou 79, 80 ou 600, 700) situé à l'intérieur du moyen de canal et en aval du moyen moteur d'entrée pour appliquer une force continue au substrat dans une direction opposée à celle de la feuille entrant initialement alors que le substrat est sous l'influence du moyen d'entrée, d'où il résulte que, alors que la première partie du substrat quitte le moyen d'entrée, la force du moyen à étranglement entraînera le substrat pour le faire entrer dans le moyen de sortie pour le faire sortir du moyen de canal.

2. Inverseur selon la revendication 1, où le moyen de canal d'inversion (73) comprend un inhibiteur de flambage (89) tel qu'un ski monté en pivotement.

3. Inverseur selon la revendication 1, ou la revendication 2, où le moyen à étranglement comprend une bille folle (79) et un rouleau moteur (80).

4. Inverseur selon la revendication 3, où la bille folle (79) est logée à l'intérieur d'un canal incliné (74) situé à l'intérieur d'un bloc de support, ou est montée sur un arbre (85) et est rappelée par ressort (81) contre le rouleau moteur.

5. Inverseur selon la revendication 1 ou la revendication 2, où le moyen à étranglement (76, 77) comporte un moyen provoquant une ondulation (200, 300) pour onduler le substrat afin d'augmenter sa rigidité, le moyen provoquant une ondulation (200, 300) comportant de préférence une paire de rouleaux opposés avec au moins une bague fixée à chaque rouleau.

FIG.1

0 047 181

FIG. 2

FIG. 3

2

FIG. 4

FIG. 5

FIG. 6

FIG. 9

FIG. 7

FIG. 8

4